# NEW EUROPEAN PATENT SPECIFICATION

(11) **EP 3 778 393 B2**
(45) Date of publication and mention of the opposition decision: **02.04.2025**
(45) Mention of the grant of the patent: 08.12.2021
(21) Application number: 19400019.6
(22) Date of filing: 13.08.2019
(51) Int. Cl.: B64D 1/22

(54) **A LOAD CARRYING ASSEMBLY**
LASTTRAGANORDNUNG
ENSEMBLE DE SUPPORT DE CHARGE

(43) Date of publication of application: 17.02.2021
(73) Proprietor: AIRBUS HELICOPTERS DEUTSCHLAND GmbH, 86609 Donauwörth (DE)
(72) Inventor: Behrens, Michael, D-86655 Harburg (DE); Brosinger, Heiko, D-85051 Ingolstadt (DE)
(74) Representative: GPI Brevets

(56) References cited:
- EP-A1- 3 228 577
- WO-A2-2007/132454
- US-A1- 2019 241 267
- US-B1- 8 226 042
- US-B1- 8 591 161

## Description

The present embodiments relate to a load carrying assembly and, more particularly, to a load carrying assembly for carrying a load with a rotary wing aircraft.

Aircrafts and, more particularly, rotary wing aircrafts such as e.g. helicopters are commonly used to perform aerial transportation and delivery tasks, including passenger transport, disaster relief, or carrying all kind of external loads. By way of example, rotary wing aircrafts are used to transport and deliver loads to mountainous regions in general and, more specifically, to mountainous regions where no roads exist or where roads cannot be used for transportation and delivery, e. g. due to extreme weather conditions in winter and so on.

Furthermore, rotary wing aircrafts are used for transportation and delivery of loads in the construction sector, where the loads may represent any kind of material. Moreover, rotary wing aircrafts can be used in firefighting for transportation of firefighting buckets. In addition, rotary wing aircrafts are also very useful in wood logging for transporting harvested wood. In all of these cases, the rotary wing aircrafts can be required to transport comparatively heavy external loads which can weigh up to several tons.

In order to enable a rotary wing aircraft for transportation of an external load, the rotary wing aircraft can be equipped with a hoist or lift mechanism such as a cargo hook arrangement to which an external load mass rope for connection to the external load can be attached. Thus, a given external load can be suspended from the rotary wing aircraft by means of the external load mass rope, which is particularly useful for bulky loads which do not fit into the cabin of the rotary wing aircraft.

Classically, such a hoist or lift mechanism has a boom that is secured to the fuselage of the aircraft with an external system. The hoist may include a winch mechanism that is fixed to the boom and a rope/cable attached to the winch mechanism so as to be unwound from or wound into the winch mechanism to respectively descend or ascend. Generally, a load carrying harness is secured to the rope/cable. Thus, people and/or objects can be moved by the mechanism while being attached to the load carrying harness.

In many rotary wing aircrafts, the hoist mechanism is located above an access opening provided in the fuselage. This access opening allows people or objects to enter and exit the fuselage. Depending on the requirements of the mission and on the architecture of these rotary wing aircrafts, the opening access may be a side door, a rear door or a movable panel, a floor trap or the like.

In a conventional rescue hoist mechanism, it is quite challenging to control the position of the rescue hoist. Moving the rotary wing aircraft's airframe to control the position of the rescue hoist may be a major obstacle in rescue activities that are often required to be fast and accurate.

For instance, in case of a rescue mission near a steep mountain wall, an operator onboard the aircraft needs to throw a complex rope system to a target position on the mountain wall. There, someone has to catch the rope and pull over the rescue hoist that is attached to the rope. This is especially difficult in windy situations.

Often, lifting a load may cause the load to oscillate or rotate, especially if the load is light, has high drag, and an insufficient sling load length. The rotation or oscillating movement of the load may be transmitted to the aircraft and lead to unstable flight characteristics which must be prevented by all means including countermeasures initiated by the aircraft's pilot or an emergency load drop.

A regular sling load system always operates underneath the aircraft and therefore, in case of a hovering rotary wing aircraft, in its downwash region. This complicates the accurate coupling process of the sling load system with the target and a stable transportation of the load.

Sling load operations often use ropes that are up to 200 m long. Moving cargo attached to these long ropes is very challenging since the load is carried below the aircraft and out of the pilot's sight. Furthermore, flying with a deployed rope without cargo may cause the rope to interfere with and damage a rotor of the rotary wing aircraft, thereby endangering the aircraft and everyone inside.

Document JP 2018/140860 A describes a lifted object attitude stabilizing device. This lifted object attitude stabilizing device has: a body for holding each unit; an upper connection unit that is provided to the body for connection to a rope from above; an attitude detection unit that detects the attitude of a lifted object; an attitude stabilizing mechanism that is provided to the body and stabilizes the attitude of the lifted object on the basis of the detection result of the attitude detection unit; an attitude stabilization control unit that is provided to the body and controls the attitude stabilizing mechanism; and a lower connection unit that is provided to the body so as to connect the rope holding the lifted object.

In particular, the lifted object attitude stabilizing device uses two fans to stabilize the load's vertical axis rotation. The system has a horizontal beam and two electrical fans. The load to be transported is attached to the horizontal beam and its free yaw movement can then be stabilized or actively changed by the fans.

Document US 8,532,846 B2 describes a sling load computer-operated hook assembly for helicopter or unmanned aerial vehicle (UAV). The hook assembly allows automated pick-up and delivery. The computer hook assembly also (1) directs navigation of the aircraft, (2) finds and engages loads for pickup, (3) controls stability of the sling load en route, and (4) releases the load at the delivery point. The self-contained feature allows the hook assembly to be moved from aircraft to aircraft. The hook assembly senses weight, motion and position of the load for stability control. An integral GPS unit is used to direct navigation. These data are transmitted to the aircraft's autopilot and flight director instruments to provide navigation to the designated points and to control load stability en route. Mission data for pick-up and release points can be received remotely from a command and control tactical data net. Alternately, mission data can be locally entered.

In other words, the sling load computer-operated hook assembly determines the position of the hook via cameras, GPS and other location devices, which are installed on the hook to identify the cargo's movement. The sensor data is transmitted via a wireless connection to a computer system that analyses the motion and calculates how the helicopter or UAV has to be maneuvered such that the hook assembly approaches the desired location. However, the hook assembly has no thrust producing devices and has to rely on the movements of the helicopter or UAV.

Document US 8,643,850 B1 describes a method for automatically guiding a lifting device on a lifting apparatus to a lifting point on a load. A beacon that is associated with the lifting point on the load has a plurality of lights arranged in a predetermined pattern. A sensor on the lifting apparatus detects the lights and provides signals to a processor. The processor calculates location of the lifting point, and develops signals that direct the lifting apparatus, or an operator of the lifting apparatus, to engage the lifting point with a lifter on the lifting apparatus. The load may then be lifted and moved.

However, the lifting device has no thrust producing devices and has to rely on the movements of the lifting apparatus to which it is attached, and thereby fails to provide an easy coupling with a load in remote locations.

Document US 2019/0100413 A1 describes a load placement system that precisely places slung loads by allowing a helicopter pilot to essentially reel the load to the ground. The placement system uses lead lines on the slung load that can be connected to the ground by support personnel. A winch system is connected to the lead lines and guides the load to an intended location. The placement system eliminates at least some of the ground personnel previously needed for pulling the load to a target location and orientation. The placement system may eliminate substantially all ground personnel by using unmanned aerial vehicles (UAVs) to automatically connect the lead lines to the ground. The UAVs also may actively control the slung load while in flight to reduce pilot workload and enable higher transport speeds.

In other words, the load placement system uses UAVs at the end of lead lines to enable the drop of a load at a predetermined position, thereby eliminating the need to have ground personnel for receiving the load. The UAVs are able to freely move in all three dimensions. Thus, the load placement system can also control the load during transportation, for example by preventing unwanted rotation.

Document US 2017/0291707 A1 describes systems and methods for operating a hoist and hook assembly. The hoist and hook assembly may determine a position of a target using a position sensor.

A hook assembly may be positioned in response to the position of the target as detected by the position sensor. Positioning the hook assembly may include articulating a boom coupled to a hoist, using one or more local thrust sources on the hook assembly, and/or moving an airframe relative to the position of the target.

In particular, three fans that are oriented at a 120° angle to each other move the hook assembly to a desired position in the x-y plane. Compass, position sensor, and communication device may assist in steering the hook assembly.

Document US 8,591,161 B1 describes a maneuvering autonomous rotorcraft cargo attachment system for engaging two mating elements of a coupling mechanism. The maneuvering autonomous rotorcraft cargo attachment system includes a first system on a ship deck to position a first coupling mechanism element in response to positioning commands and a second system attached to a rotorcraft hoist cable to position the second coupling mechanism element in response to positioning commands. A controller calculates and issues the positioning commands to the first and second positioning systems thereby effecting engagement of the two coupling elements.

In particular, two different embodiments of the second system are described. One system has three actuators thrusters with two lateral actuator thrusters and another one in line with a rudder. The other system has four thrusters, two on each side of a box that provide thrust in opposing directions to enable longitudinal, lateral, or rotational movement of the box.

Document US 2019/0241267 A1 describes load stability systems and methods for stabilizing swinging motions of suspended loads. The load stability systems include a fully automated, self-powered device that employs thrust to counteract and control lateral and rotational motion of an external load. The device is a temporary installment on the load, cable or boom, and is agnostic to the platform from which it is suspended.

Based on the limitations and drawbacks of the prior art, an objective is to provide a load carrying assembly for carrying a load with a rotary wing aircraft. The load carrying assembly should be able to change its position relative to the load without changing the position of the rotary wing aircraft. The load carrying assembly should also be able to stabilize the load during flight by avoiding rotational movements or oscillating movements of the load. Furthermore, the load carrying assembly should be an active system that can be controlled independently from the rotary wing aircraft.

This objective is solved by an apparatus comprising the features of claim 1. More specifically, a load carrying assembly for carrying a load with a rotary wing aircraft comprises a cargo cable and a load engaging system. The cargo cable comprises a first end that is attachable to at least one of a hoist or a cargo hook arrangement of the rotary wing aircraft, and a second end. The load engaging system comprises a first attachment that is attached to the second end of the cargo cable, a second attachment that is adapted for receiving a load, a connecting apparatus that connects the first attachment with the second attachment, wherein the connecting apparatus extends between the first and second attachments in a first direction and comprises a beam that connects the first attachment with the second attachment, wherein the connecting apparatus further comprises a box that is attached to the beam, and wherein the beam defines the first direction and is adapted to transfer the weight of the load from the second attachment to the first attachment, at least two first thrust producing devices that are attached to the connecting apparatus and produce thrust in a second direction that is orthogonal to the first direction, and at least two second thrust producing devices that are attached to the connecting apparatus and produce thrust in a third direction that is orthogonal to the first and the second directions.

The load carrying apparatus may be a drone-based system which is intended to stabilize and position a load attached to the external rescue hoist or the cargo hook arrangement of a rotary wing aircraft. The load carrying assembly may include a frame and a thrust producing system. An operator may use a remote control to control the thrust producing system, which may push and displace the load relative to the rotary wing aircraft.

The thrust producing system may include multiple fans which enable movement along and rotation around all three axes. If desired, the fans may be electrically driven.

The thrust producing system may be controlled by a flight controller. The flight controller may have several sensors and an onboard computing unit. If desired, flight controller, sensors, and computing unit may be separate entities that are coupled together by a wire or wirelessly.

Illustratively, the load engaging system is equipped with a landing gear. The landing gear may support the frame and avoid damage during the landing process.

The load engaging system is hooked onto a rope, either attached to the cargo hook arrangement or the external hoist. The load carrying assembly may power-up when the rotary wing aircraft is airborne and a load is attached to the load engaging system. The electrical fans may stabilize the load during flight. If desired, the electrical fans may be controlled remotely by the operator. Thus, the operator may remotely manoeuvre the load engaging system relative to the rotary wing aircraft with or without a load attached to the load engaging system.

In other words, the load engaging system may be remotely controlled and move relative to the rotary wing aircraft to approach a target during a rescue mission or to pick up a cargo in an area in which moving the rotary wing aircraft may be dangerous.

Furthermore, the ability to perform pick-up and drop-off operations more precisely may eliminate the need for ground personnel. Moreover, the pilots' workload is reduced due to the possibility of keeping the rotary wing aircraft steadily hovering while the more precise position adjustment is done by the load engaging system.

Reducing the pilots' workload could be especially crucial in mountain rescue missions close to a cliff, where the rotary wing aircraft needs to maintain a safe distance from the cliff, or in offshore wind farm access, where the rotary wing aircraft cannot come too close to the blades of the wind mills, nor can the cargo cable of the load carrying assembly be allowed to swing close to the blades of the wind mills.

A load engaging system that is movable relative to the rotary wing aircraft also allows escaping the downwash region of the rotary wing aircraft, thereby bringing the operation of the load engaging system to a safer area on the side of the rotary wing aircraft where the load is not affected directly by the strong masses of air produced by the rotors. Moreover, escaping the downwash region provides an increased clearance during the mission by reducing the amount of dirt or small particles that are stirred up by the strong masses of air from the rotors.

Placing a camera on the front of the load engaging system may increase the overall safety of a load pick-up or drop-off operation. For example, a camera may provide more control by informing the pilots about their surroundings, thereby increasing the chances of success at the first attempt of the load pick-up or drop-off operation. As a consequence, the duration of the load pick-op or drop-off operation may be reduced, which reduces the time during which the rotary wing aircraft has to stay in a dangerous zone.

A camera on the load engaging system may also eliminate the need for modifications to the rotary wing aircraft that are sometimes required for performing rescue missions. Examples include the adaptation of the windows (e.g., bubble windows, etc.) for a better visibility of the targeted load by the pilots.

Moreover, for aerial filming, camera equipment may be installed on the load engaging system, which may provide more degrees of freedom compared to a conventional camera attachment solution and result in a shadow free solution for better quality pictures.

During flight, the load engaging system may prevent that the cargo cable comes in contact with a rotor of the rotary wing aircraft by steering the load engaging system, and thereby the cargo cable, away from the rotor. As a result, the rotary wing aircraft may move faster and safer, even with the cargo cable extended.

Illustratively, the load carrying assembly may be installed in any rotary wing aircraft and does not require any changes or new certifications of the aircraft.

The load engaging system can control the end of the cargo cable along every axis, with the exception of the height. The height may be controlled by the rotary wing aircraft's altitude or the cargo cable extension (e.g., using a winch).

Thus, the load engaging system may travel in one direction of a plane (e.g., in longitudinal direction of the aircraft or along an x-axis) using the thrust of the main fans, or in the other direction of the plane (e.g., in lateral direction of the aircraft or along a y-axis) using the thrust of any one of the side fans.

The main fans also allow the load engaging system to pivot in the plane (e.g., in the x-y-plane), which is sometimes also referred to as yaw rotation, by driving the main fans at different speeds. Thus, the load engaging system may first pivot around the vertical axis and then move in the other direction of the plane (e.g., in lateral direction of the aircraft or along a y-axis) using the thrust of the main fans.

In other words, the load engaging system can be placed in any point of a reversed cone below the rotary wing aircraft, whereby the height of the cone and the radius of the cone's base is defined by the length of the cargo cable extension.

Besides the yaw rotation, the load engaging system may use the main fans and the side fans to provide rotation around the one direction of the plane (e.g., rotation around the x-axis), which is sometimes also referred to as roll rotation and provide rotation around the other direction of the plane (e.g., rotation around the y-axis), which is sometimes also referred to as pitch rotation.

In other words, the load engaging system may stabilize a load during flight by controlling movement in the x-y plane and by controlling yaw, roll, and pitch rotation.

According to some embodiments, the cargo cable is provided to move the load engaging system in the first direction.

According to some embodiments, the at least two first thrust producing devices are adapted to move the load engaging system in the second direction and to enable rotational movement around an axis defined by the first direction.

According to some embodiments, the at least two second thrust producing devices are adapted to move the load engaging system in the third direction.

According to some embodiments, the at least two first thrust producing devices comprise rotating blades.

According to some embodiments, the at least two second thrust producing devices comprise rotating blades.

According to some embodiments, the at least two first thrust producing devices are attached to the connecting apparatus in the third direction on opposite sides of the box, and wherein the at least two second thrust producing devices are attached to the connecting apparatus on the same side of the box at which the second attachment is arranged.

According to some embodiments, the first attachment further comprises a swivel that is provided to enable rotational movement of the box around the axis defined by the first direction relative to the cargo cable.

According to some embodiments, the load carrying assembly further comprises a plurality of sensors that is attached to the connecting apparatus and generates sensor data about the status of the load engaging system, wherein the sensor data is associated with at least one of a motion variation of the load engaging system, a rotation around the axis defined by the first direction, a rotation around a first additional axis defined by the second direction, or a rotation around a second additional axis defined by the third direction.

According to some embodiments, the plurality of sensors further comprises a camera that is attached to the connecting apparatus and generates sensor data in form of a video feed.

According to some embodiments, the load carrying assembly further comprises a communication device that is attached to the connecting apparatus, coupled to at least some of the plurality of sensors, and adapted to send at least a portion of the sensor data from the at least some of the plurality of sensors to an operator and to receive command signals from the operator.

According to some embodiments, the load carrying assembly further comprises a controller that is attached to the connecting apparatus and controls the at least two first and second thrust producing devices based at least on some of the sensor data or the command signals from the operator.

According to some embodiments, the load carrying assembly further comprises at least one of a battery that is attached to the connecting apparatus or a power harness that is coupled to the cargo cable, wherein the at least one of a battery or a power harness supplies electricity to the at least two first thrust producing devices.

Furthermore, a method for operating the above-described load carrying assembly comprises the operations of using a plurality of sensors to generate sensor data about the status of the load engaging system that is attached via the cargo cable and at least one of a hoist or a cargo hook arrangement to a rotary wing aircraft, wherein the sensor data is associated with at least one of a motion variation of the load engaging system, a rotation around a first axis defined by a first direction, a rotation around a second axis defined by a second direction, or a rotation around a third axis defined by a third direction, wherein the first, second, and third directions are orthogonal to each other; with a communication device, receiving command signals from an operator; and using a controller to control at least some of at least the two first and second thrust producing devices based at least on some of the sensor data or the command signals from the operator.

Embodiments are outlined by way of example in the following description with reference to the attached drawings. In these attached drawings, identical or identically functioning components and elements are labeled with identical reference numbers and characters and are, consequently, only described once in the following description.
- Figure 1A is a diagram of an illustrative rotary wing aircraft with a load carrying assembly that is attached to a hoist mechanism located above an access opening in the fuselage in accordance with some embodiments,
- Figure 1B is a diagram of an illustrative rotary wing aircraft with a load carrying assembly that is attached to a cargo hook arrangement located at the underside of the fuselage in accordance with some embodiments,
- Figure 2A is a diagram of an illustrative rotary wing aircraft with a load engaging assembly that is positioned at an angle from a vertical axis of the rotary wing aircraft in accordance with some embodiments,
- Figure 2B is a diagram of an illustrative rotary wing aircraft with a load engaging assembly that is positioned at an angle from a longitudinal axis of the rotary wing aircraft in accordance with some embodiments,
- Figure 3A is a diagram of an illustrative load engaging system in accordance with some embodiments,
- Figure 3B is a diagram of the illustrative load engaging system of Figure 3A seen from below in accordance with some embodiments, and
- Figure 4 is a flowchart showing illustrative operations for operating a load carrying assembly in accordance with some embodiments.

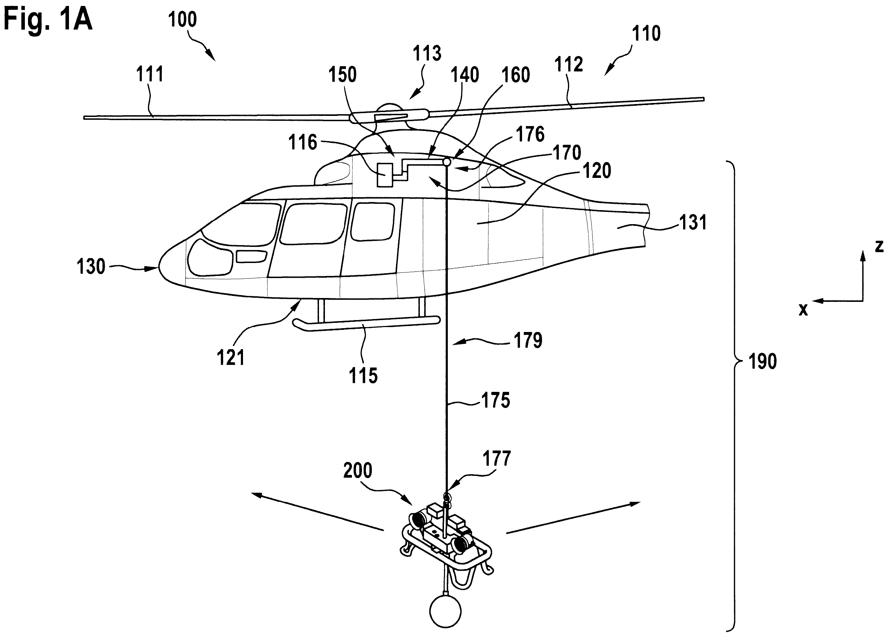

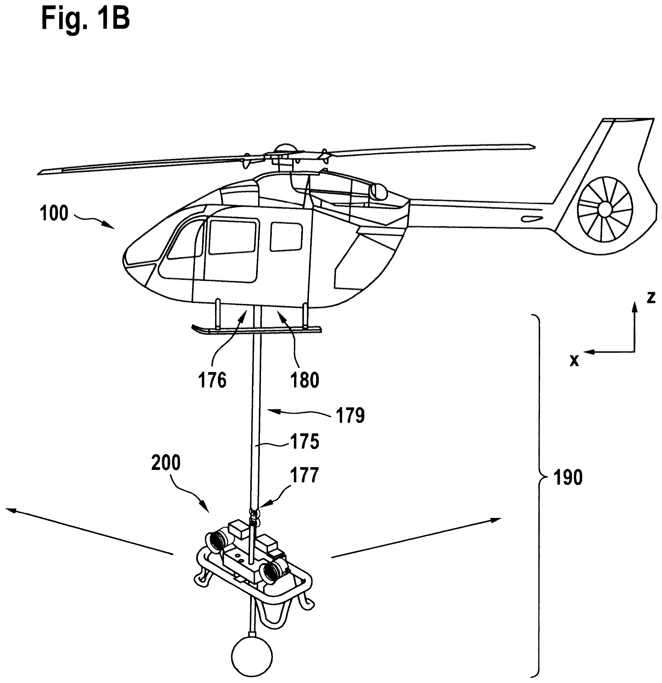

Exemplary embodiments may be included in any rotary wing aircraft that is adapted for vertical take-off and landing. Figure 1 shows an example of a rotary wing aircraft 100. The rotary wing aircraft may be a multicopter, a drone, or any other rotorcraft such as tiltable-wing, fixed-wing, or wingless aircraft. Aircraft 100 is exemplarily illustrated as a helicopter. Thus, for purposes of simplicity and clarity, aircraft 100 is hereinafter referred to as "helicopter" 100.

Helicopter 100 is exemplarily embodied with fuselage 120 and at least one multi-blade main rotor 110 for providing lift and forward or backward thrust during operation.

At least one multi-blade main rotor 110 illustratively comprises a plurality of rotor blades 111, 112. Rotor blades 111, 112 are mounted at an associated rotor head 113 to a rotor shaft, which rotates in operation of helicopter 100 around the rotor shaft.

Fuselage 120 comprises fuselage underside 121 that is illustratively connected to landing gear 115. Landing gear 115 is exemplarily embodied as a skid-type landing gear.

Fuselage 120 may define nose region 130 that is arranged in front of fuselage 120. Fuselage 120 also defines tail boom 131, which is cut away and not shown in greater detail, for simplicity and clarity of the drawings.

If desired, helicopter 100 may provide equipment 160 such as an external load device (e.g., a hoist 170) that is secured to fuselage 120 with component 140 that is attached to motor 116 via power transmission system 150. Motor 116 may illustratively be arranged under rotor head 113 and provide a rotational movement to power transmission system 150.

Power transmission system 150 may transform the rotational movement of motor 116 into a circular movement of component 140. An outward circular movement of component 140 (i.e., a circular movement of component 140 that moves equipment 160 away from helicopter 100) may deploy equipment 160, whereas an inward circular movement of component 140 (i.e., a circular movement of component 140 that moves equipment 160 closer to helicopter 100) may retrieve equipment 160.

Helicopter 100 may include a load carrying assembly 190 for carrying a load. The load carrying assembly 190 may include cargo cable 175 and load engaging system 200. Illustratively, cargo cable 175 may have a first end 176 that is attachable to hoist 170 and a second end 177 that is attached to an attachment of the load engaging system 200. If desired, hoist 170 may deploy and retrieve cargo cable 175, thereby determining the deployed length of cargo cable 175 (i.e., the extension of cargo cable 175 from helicopter 100 in z-direction). In other words, cargo cable 175 is provided to move the load engaging system in the z-direction.

Load engaging system 200 may include at least two thrust producing devices that produce thrust in at least one direction that is vertical to the z-direction, thereby moving load engaging system 200 along a spherical surface that is defined by the length of the deployed cargo cable 175.

The at least two thrust producing devices may be powered electrically, if desired. By way of example, a power harness 179 may be coupled to cargo cable 175 and supply electricity to the at least two thrust producing devices.

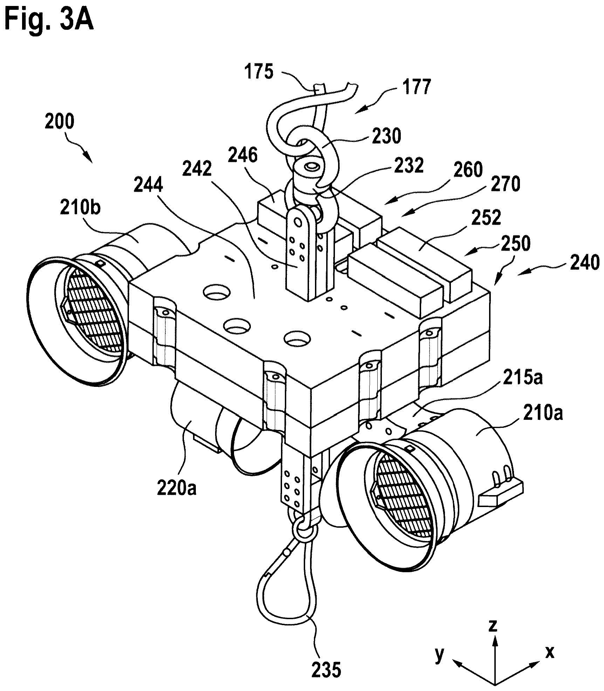

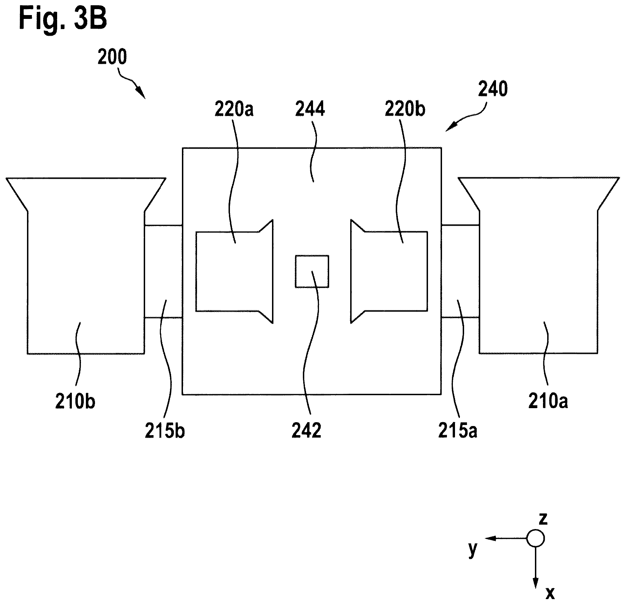

Illustratively, load engaging system 200 of Figures 3A and 3B may implement the load engaging system 200 of Figure 1A that is attached to second end 177 of cargo cable 175.

Figure 1B is a diagram of an illustrative rotary wing aircraft 100 with a load carrying assembly 190 that is attached to a cargo hook arrangement 180 located at the fuselage underside 121. Illustratively, cargo hook arrangement 180 may be removably installed in the subfloor region of rotary wing aircraft 100 between a floor structure and a bottom shell.

By way of example, cargo hook arrangement 180 is mounted between two longerons, and longerons are connected to floor structure and bottom shell. If desired, cargo hook arrangement 180 may be mounted between two transversal frame components instead.

A first end 176 of cargo cable 175 may be attachable to the cargo hook arrangement 180. For example, cargo hook arrangement 180 may include a winch and the first end 176 of cargo cable 175 may be attachable to the winch. When the first end of 176 of cargo cable 175 is attached to the winch, the winch may deploy cargo cable 175, thereby determining the length of deployed cargo cable 175 (i.e., the maximal extension of cargo cable 175 from helicopter 100 in z-direction).

A second end 177 of cargo cable 175 may be attached to an attachment of load engaging system 200. Illustratively, load engaging system 200 of Figures 3A and 3B may implement the load engaging system 200 of Figure 1B that is attached to second end 177 of cargo cable 175.

By way of example, load engaging system 200 may include at least two first thrust producing devices that produce thrust in x-direction that is orthogonal to the z-direction. If desired, load engaging system 200 may include at least two second thrust producing units that produce thrust in y-direction that is orthogonal to the x- and z-direction.

In other words, the at least two first and second thrust producing devices may move load engaging system 200 along a spherical surface that is defined by the length of the deployed cargo cable 175 and the position from which the cargo cable 175 is deployed. The position of load engaging system 200 on the spherical surface may be defined by the length of the deployed cargo cable 175 and two angles (e.g., a first angle between cargo cable 175 and z-axis and a second angle between cargo cable 175 and x-axis).

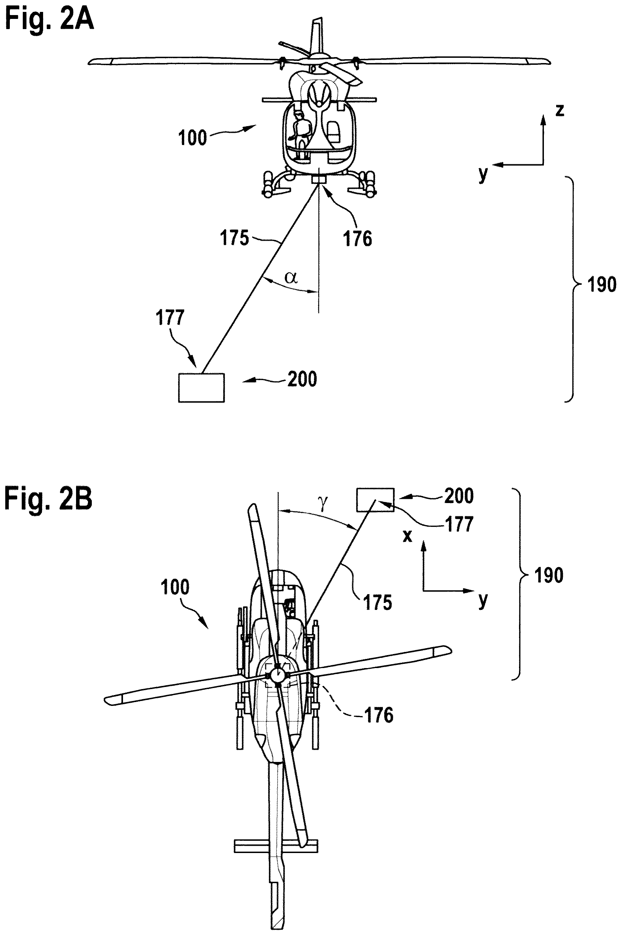

Figure 2A shows illustratively the first angle between cargo cable 175 and z-axis as angle α. Figure 2B shows illustratively the second angle between cargo cable 175 and x-axis as angle γ. Alternatively, the second angle may be shown as an angle β between cargo cable 175 and y-axis. The angle β between cargo cable 175 and y-axis may also be computed as β = 90° - γ.

Figures 2A and 2B illustratively show cargo cable 175 attached to a cargo hook arrangement such as cargo hook arrangement 180 of Figure 1A. Thus, the position from which the cargo cable 175 is deployed is below helicopter 100. However, cargo cable 175 may be attached to a hoist such as hoist 170 of Figure 2A, if desired. Attaching cargo cable 175 to a hoist changes the position from which the cargo cable 175 is deployed.

Figures 3A and 3b are diagrams of an illustrative load engaging system 200. Load engaging system 200 may include attachment 230 that is attached to the second end 177 of cargo cable 175. If desired, load engaging system 200 may include attachment 235 that is adapted for receiving a load.

Attachment 230 may be embodied by an eye, a hook, a snap hook, a spring safety hook, a swivel hook, a ring, or any other attachment that may be attached to the second end 177 of cargo cable 175. Attachment 235 may each be embodied by an eye, a hook, a snap hook, a spring safety hook, a swivel hook, a ring, or any other attachment that may be adapted for receiving a load.

Illustratively, load engaging system 200 may include a connecting apparatus 240 that connects attachment 230 with attachment 235. Connecting apparatus 240 may extend between attachments 230, 235 in z-direction.

As shown, connecting apparatus 240 includes a beam 242 that connects attachment 230 with attachment 235. The beam 242 is adapted to transfer the weight of the load from attachment 235 to attachment 230. Beam 242 defines the z-direction.

The connecting apparatus 240 includes a box 244. The box is attached to beam 242. By way of example, swivel 232 may be provided between attachment 230 and beam 242. Swivel 232 may enable rotational movement of box 244 around the axis defined by the z-direction of Figures 1A to 2A relative to cargo cable 175.

A plurality of sensors 250 may be attached to connecting apparatus 240. Sensors 250 may generate sensor data about the status of load engaging system 200. For example, sensors 250 may generate sensor data that includes at least one of a motion variation of the load engaging system 200 (e.g., in x-, y-, or z-direction of Figures 1A to 2B), a rotation around an axis defined by a first direction (e.g., z-direction of Figures 1A to 2A), a rotation around another axis defined by a second direction (e.g., x-direction of Figures 1A, 1B, or 2B), or a rotation around yet another axis defined by a third direction (e.g., y-direction of Figures 2A or 2B).

As an example, the plurality of sensors 250 may include a camera 252 that is attached to connecting apparatus 240 and generates sensor data in form of a video feed. If desired, additional cameras may be attached to connecting apparatus 240 and provide a video feed of different directions.

The video feed of camera 252 may be transmitted to virtual reality (VR) glasses that an operator who controls the load engaging system 200 may wear.

If desired, the plurality of sensors 250 may include a GPS device, one or more gyro sensors (e.g., a gyro sensor for each one of x-, y-, and z-axis), one or more velocity sensors, etc.

Illustratively, a communication device 260 may be attached to connecting apparatus 240. Communication device 260 may be coupled to at least some of the plurality of sensors 250. Communication device 260 may be adapted to send at least a portion of the sensor data from the at least some of the sensors 250 to an operator. Communication device 260 may be adapted to receive command signals from the operator.

If desired, communication device 260 may communicate with a controller 270 that is attached to connecting apparatus 240. As an example, communication device 260 may receive instructions from the operator and communicate the instructions to controller 270. As another example, communication device 260 may send at least a portion of the sensor data, which may be the same or a different portion of the sensor data that the communication device 260 sends to the operator, to controller 270.

Communication device 260 may include a wireless communication module such as a radio frequency (RF) module, an infrared communication module, an ultrasonic communication module, or any other wireless communication module that enables communication between load engaging system 200, the operator, and controller 270.

Communication device 260 may include a wired communication module such as a fiber-optic cable, a coaxial cable, an ethernet cable, or any other wired communication cable and respective receive and transmit modules for communication over fiber-optic cable, coaxial cable, ethernet cable, or any other wired communication cable.

By way of example, any one of battery 248, sensors 250, communication device 260, and/or controller 270 may be placed on the outside or on the inside of box 244. The connections between battery 248, sensors 250, communication device 260, and/or controller 270 may be placed inside box 244 for ensuring a safe flight.

Illustratively, at least two first thrust producing devices 210a, 210b may be attached to connecting apparatus 240. The at least two first thrust producing devices 210a, 210b may produce thrust in x-direction that is orthogonal to z-direction.

The at least two first thrust producing devices 210a, 210b may be attached to connecting apparatus 240 in y-direction on opposite sides of box 244 (e.g., using attachments 215a, 215b shown in Figure 3B).

Thus, the at least two first thrust producing devices 210a, 210b are adapted to move load engaging system 200 in x-direction (e.g., by operating the at least two first thrust producing devices 210a, 210b at the same speed) and to enable rotational movement around the z-axis (e.g., by operating the at least two first thrust producing devices 210a, 210b at different speeds).

Illustratively, at least two second thrust producing devices 220a, 220b may be attached to connecting apparatus 240 and are shown in Figure 3B. The at least two second thrust producing devices 220a, 220b may produce thrust in y-direction that is orthogonal to x-direction and y-direction.

The at least two second thrust producing devices 220a, 220b may be attached to connecting apparatus 240 on the same side of box 244 at which attachment 235 is arranged. In other words, the at least two second thrust producing devices 220a, 220b may be attached below the box. If desired, the at least two second thrust producing devices 220a, 220b may be attached to connecting apparatus 240 on the same side of box 244 at which attachment 230 is arranged (i.e., above box 244).

The at least two second thrust producing devices 220a, 220b may be arranged facing each other. If desired, the at least two second thrust producing devices 220a, 220b may be arranged turned away from each other.

Thus, the at least two second thrust producing devices 220a, 220b may be adapted to move load engaging system 200 in y-direction. As shown in Figure 3B, thrust producing device 220a may be powered and thrust producing device 220b may be turned off to move load engaging system 200 in positive y-direction. Similarly, thrust producing device 220a may be turned off and thrust producing device 220b may be powered to move load engaging system 200 in negative y-direction.

The at least two first thrust producing devices 210a, 210b and/or the at least two second thrust producing devices 220a, 220b may include rotating blades. The rotating blades may provide thrust. The at least first and second thrust producing devices 210a, 210b, 220a, 220b may be identical. If desired, the at least first thrust producing devices 210a, 210b may be different than the at least two second thrust producing devices 220a, 220b.

The at least two first and second thrust producing devices 210a, 210b, 220a, 220b may be any type of thrust producing device such as a fan, a propeller, a rotor, a jet fan, or any other type of thrust producing device. The at least two first and second thrust producing devices 210a, 210b, 220a, 220b may enclose the rotating apparatus (e.g., the rotating blades) within a protective grid to avoid that any part of the load (e.g., a loose rope or a loose tissue) may damage the respective thrust producing device during pick-up, drop-off, and transportation of the load.

The thrust produced by each one of the at least two first and second thrust producing devices 210a, 210b, 220a, 220b may be controllable individually.

If desired, controller 270 that is attached to the connecting apparatus 240 may control the at least two first and second thrust producing devices 210a, 210b, 220a, 220b based at least on some of the sensor data and the command signals from the operator. In particular, controller 270 may control the rotational speed of each one of the at least two first and second thrust producing devices 210a, 210b, 220a, 220b individually.

Thus, controller 270 may stabilize the flight behavior of load engaging system 200 by correcting and compensating any involuntary movements of load engaging system 200.

The at least two first and second thrust producing devices 210a, 210b, 220a, 220b may be electrically powered, if desired.

The load carrying assembly 190 may include a battery 246 that is attached to the connecting apparatus 240. For example, battery 246 may be located inside box 244. Battery 246 may supply electricity to the at least two first and/or second thrust producing devices 210a, 210b, 220a, 220b. If desired, battery 246 may provide electricity to the plurality of sensors 250, communication device 260, and/or controller 270.

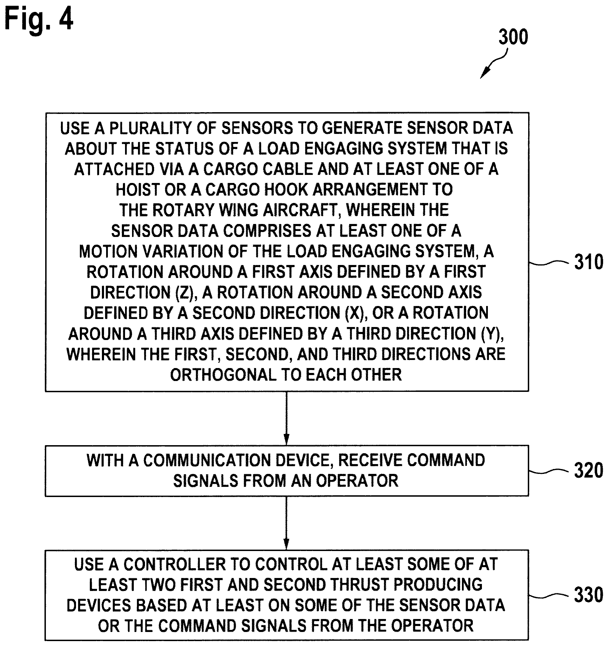

Figure 4 is a flowchart 300 showing illustrative operations for operating a load carrying assembly for carrying a load with a rotary wing aircraft.

During operation 310, the load carrying assembly may use a plurality of sensors to generate sensor data about the status of a load engaging system that is attached via a cargo cable and at least one of a hoist or a cargo hook arrangement to the rotary wing aircraft, wherein the sensor data comprises at least one of a motion variation of the load engaging system, a rotation around a first axis defined by a first direction (z), a rotation around a second axis defined by a second direction (x), or a rotation around a third axis defined by a third direction (y), wherein the first, second, and third directions are orthogonal to each other.

For example, load carrying assembly 190 of Figures 1A to 2B may use sensors 250 of Figure 3A that are attached to connecting apparatus 240 of load engaging system 200 to generate sensor data about the status of load engaging system 200. Load engaging system 200 may be attached via cargo cable 175 and at least one of a hoist 170 or a cargo hook arrangement 180 to the rotary wing aircraft. The sensor data about the status of load engaging system 200 may include at least one of a motion variation of load engaging system 200, a rotation around z-axis, a rotation around x-axis, or a rotation around y-axis, whereby x-axis, y-axis, and z-axis form a cartesian coordinate system.

During operation 320, the load carrying assembly may, with a communication device, receive command signals from an operator.

For example, load carrying assembly 190 of Figures 1A to 2B may use communication device 260 of Figure 3A that is attached to connecting apparatus 240 of load engaging system 200 to receive command signals from an operator.

During operation 330, the load carrying assembly may use a controller to control at least some of at least two first and second thrust producing devices based at least on some of the sensor data or the command signals from the operator.

For example, load carrying assembly 190 of Figures 1A to 2B may use controller 270 of Figure 3A to control at least some thrust producing devices 210a, 210b, 220a, 220b based at least on some of the sensor data or the command signals from the operator.

It should be noted that the above-described embodiments are merely described for illustration purposes, but not in order to restrict the present invention thereto. Instead, multiple modifications and variations of the presented embodiments are possible and should, therefore, also be considered as being part of the invention.

For example, load engaging system 200 of Figures 3A and 3B is shown with two thrust producing devices 210a, 210b that are attached on both sides of box 244. However, thrust producing devices 210a, 210b of Figures 3A and 3B may be attached differently. For example, thrust producing devices 210a, 210b may be attached on top or below 244.

As another example, box 244 of load engaging system 200 of Figure 3A is shown as having the shape of a cuboid. However, box 244 may have any shape, if desired. For example, box 244 may be a sphere.

Moreover, additional equipment may be attached to load engaging system 200 of Figure 3A, thereby enhancing the capabilities of load carrying assembly 190. As an example, a stretcher may be attached to attachment 235 of load engaging system 200 for rescue missions. As another example, a cargo net may be attached to attachment 235 of load engaging system 200 for carrying bulky loads.

Furthermore, hoist 170 of Figure 1A and cargo hook arrangement 180 of Figure 1B are shown to include a winch and the first end 176 of cargo cable 175 may be attachable to the winch. However, the winch may be part of the load carrying assembly 190 instead, and hoist 170 as well as cargo hook arrangement 180 may be adapted to receive the winch.

### Reference List

- 100: rotary wing aircraft
- 110: multi-blade main rotor
- 111, 112: rotor blades
- 113: rotor head
- 115: landing gear
- 116: motor
- 120: fuselage
- 121: fuselage underside
- 130: nose region
- 131: tail boom
- 140: component
- 150: power transmission system
- 160: equipment
- 170: hoist
- 175: cargo cable
- 176: first end of cargo cable
- 177: second end of cargo cable
- 179: power harness
- 180: cargo hook arrangement
- 190: load carrying assembly
- 200: load engaging system
- 210a, 210b: first thrust producing device
- 215a, 215b: attachment
- 220a, 220b: second thrust producing device
- 230: attachment
- 232: swivel
- 235: attachment
- 240: connecting apparatus
- 242: beam
- 244: box
- 246: battery
- 250: sensors
- 252: camera
- 260: communication device
- 270: controller
- 300: flowchart
- 310, 320, 330: operation

## Claims

1. A load carrying assembly (190) for carrying a load with a rotary wing aircraft (100), comprising a cargo cable (175) and a load engaging system (200),
the cargo cable (175) comprising:
a first end (176) that is attachable to at least one of a hoist (170) or a cargo hook arrangement (180) of the rotary wing aircraft (100), and
a second end (177); and
the load engaging system (200), comprising:
a first attachment (230) that is attached to the second end (177) of the cargo cable (175),
a second attachment (235) that is adapted for receiving a load,
a connecting apparatus (240) that connects the first attachment (230) with the second attachment (235), wherein the connecting apparatus (240) extends between the first and second attachments (230, 235) in a first direction (z) and comprises a beam (242) that connects the first attachment (230) with the second attachment (235), wherein the connecting apparatus (240) further comprises a box (244) that is attached to the beam (242), and wherein the beam (242) defines the first direction (z) and is adapted to transfer the weight of the load from the second attachment (235) to the first attachment (230),
at least two first thrust producing devices (210a, 210b) that are attached to the connecting apparatus (240) and produce thrust in a second direction (x) that is orthogonal to the first direction (z), and
at least two second thrust producing devices (220a, 220b) that are attached to the connecting apparatus (240) and produce thrust in a third direction (y) that is orthogonal to the first and the second directions (z, x).

2. The load carrying assembly (190) of claim 1, wherein the cargo cable (175) is provided to move the load engaging system (200) in the first direction (z).

3. The load carrying assembly (190) of any one of the preceding claims, wherein the at least two first thrust producing devices (210a, 210b) are adapted to move the load engaging system (200) in the second direction (x) and to enable rotational movement around an axis defined by the first direction (z).

4. The load carrying assembly (190) of any one of the preceding claims, wherein the at least two second thrust producing devices (220a, 220b) are adapted to move the load engaging system (200) in the third direction (y).

5. The load carrying assembly (190) of any one of the preceding claims, wherein the at least two first thrust producing devices (210a, 210b) comprise rotating blades.

6. The load carrying assembly (190) of any one of the preceding claims, wherein the at least two second thrust producing devices (220a, 220b) comprise rotating blades.

7. The load carrying assembly (190) of any one of the preceding claims, wherein the at least two first thrust producing devices (210a, 210b) are attached to the connecting apparatus (240) in the third direction (y) on opposite sides of the box (244), and wherein the at least two second thrust producing devices (220a, 220b) are attached to the connecting apparatus (240) on the same side of the box (244) at which the second attachment (235) is arranged.

8. The load carrying assembly (190) of any one of claims 1 to 6, wherein the first attachment further comprises:
a swivel (232) that is provided to enable rotational movement of the box (244) around the axis defined by the first direction (z) relative to the cargo cable (175).

9. The load carrying assembly (190) of any one of the preceding claims, further comprising:
a plurality of sensors (250) that is attached to the connecting apparatus (240) and generates sensor data about the status of the load engaging system (200), wherein the sensor data is associated with at least one of a motion variation of the load engaging system (200), a rotation around the axis defined by the first direction (z), a rotation around a first additional axis defined by the second direction (x), or a rotation around a second additional axis defined by the third direction (y).

10. The load carrying assembly (190) of claim 9, wherein the plurality of sensors (250) further comprises:
a camera (252) that is attached to the connecting apparatus (240) and generates sensor data in form of a video feed.

11. The load carrying assembly (190) of claim 9, further comprising:
a communication device (260) that is attached to the connecting apparatus (240), coupled to at least some of the plurality of sensors (250), and adapted to send at least a portion of the sensor data from the at least some of the plurality of sensors (250) to an operator and to receive command signals from the operator.

12. The load carrying assembly (190) of claim 11, further comprising:
a controller (270) that is attached to the connecting apparatus (240) and controls the at least two first and second thrust producing devices (210a, 210b, 220a, 220b) based at least on some of the sensor data or the command signals from the operator.

13. The load carrying assembly (190) of any one of the preceding claims, further comprising:
at least one of a battery (246) that is attached to the connecting apparatus (240) or a power harness (179) that is coupled to the cargo cable (175), wherein the at least one of a battery (246) or a power harness (179) supplies electricity to the at least two first thrust producing devices (210a, 210b).

14. A method (300) for operating the load carrying assembly of any one of the preceding claims, comprising:
using (310) a plurality of sensors to generate sensor data about the status of the load engaging system that is attached via the cargo cable (175) and at least one of a hoist (170) or a cargo hook arrangement (180) to a rotary wing aircraft (100), wherein the sensor data is associated with at least one of a motion variation of the load engaging system, a rotation around a first axis defined by a first direction (z), a rotation around a second axis defined by a second direction (x), or a rotation around a third axis defined by a third direction (y), wherein the first, second, and third directions are orthogonal to each other;
with a communication device, receiving (320) command signals from an operator; and
using (330) a controller to control at least some of at least the two first and second thrust producing devices based at least on some of the sensor data or the command signals from the operator.

## Patentansprüche

1. Lasttraganordnung (190) zum Tragen einer Last mit einem Drehflügelflugzeug (100), die ein Tragseil (175) und ein Lastaufnahmesystem (200) umfasst,
wobei das Tragseil (175) umfasst:
ein erstes Ende (176), das an mindestens einem von einem Hebezeug (170) oder einer Frachthakenanordnung (180) des Drehflügelflugzeugs (100) anbringbar ist, und
ein zweites Ende (177); und
das Lastaufnahmesystem (200) umfasst:
eine erste Befestigung (230), die an dem zweiten Ende (177) des Tragseils (175) angebracht ist,
eine zweite Befestigung (235), die zur Aufnahme einer Last geeignet ist,
eine Verbindungsvorrichtung (240), die die erste Befestigung (230) mit der zweiten Befestigung (235) verbindet, wobei sich die Verbindungsvorrichtung (240) zwischen der ersten und zweiten Befestigung (230, 235) in einer ersten Richtung (z) erstreckt und einen Träger (242) aufweist, der die erste Befestigung (230) mit der zweiten Befestigung (235) verbindet, wobei die Verbindungsvorrichtung (240) ferner einen Kasten (244) aufweist, der an dem Träger (242) befestigt ist, und wobei der Träger (242) die erste Richtung (z) definiert und dazu eingerichtet ist, das Gewicht der Last von der zweiten Befestigung (235) auf die erste Befestigung (230) zu übertragen,
mindestens zwei erste Schuberzeugungsvorrichtungen (210a, 210b), die an der Verbindungsvorrichtung (240) angebracht sind und Schub in einer zweiten Richtung (x) erzeugen, die orthogonal zu der ersten Richtung (z) ist, und
mindestens zwei zweite Schuberzeugungsvorrichtungen (220a, 220b), die an der Verbindungsvorrichtung (240) angebracht sind und Schub in einer dritten Richtung (y) erzeugen, die orthogonal zu der ersten und der zweiten Richtung (z, x) ist.

2. Lasttraganordnung (190) nach Anspruch 1, bei der das Tragseil (175) vorgesehen ist, um das Lastaufnahmesystem (200) in der ersten Richtung (z) zu bewegen.

3. Lasttraganordnung (190) nach einem der vorhergehenden Ansprüche, bei der die mindestens zwei ersten Schuberzeugungsvorrichtungen (210a, 210b) eingerichtet sind, um das Lastaufnahmesystem (200) in der zweiten Richtung (x) zu bewegen und eine Drehbewegung um eine durch die erste Richtung (z) definierte Achse zu ermöglichen.

4. Lasttraganordnung (190) nach einem der vorhergehenden Ansprüche, bei der die mindestens zwei zweiten Schuberzeugungsvorrichtungen (220a, 220b) eingerichtet sind, um das Lastaufnahmesystem (200) in der dritten Richtung (y) zu bewegen.

5. Lasttraganordnung (190) nach einem der vorangehenden Ansprüche, bei der die mindestens zwei ersten Schuberzeugungsvorrichtungen (210a, 210b) rotierende Flügel umfassen.

6. Lasttraganordnung (190) nach einem der vorhergehenden Ansprüche, bei der die mindestens zwei zweiten Schuberzeugungsvorrichtungen (220a, 220b) rotierende Flügel umfassen.

7. Lasttraganordnung (190) nach einem der vorhergehenden Ansprüche, bei der die mindestens zwei ersten Schuberzeugungsvorrichtungen (210a, 210b) an der Verbindungsvorrichtung (240) auf in der dritten Richtung (y) gegenüberliegenden Seiten des Kastens (244) angebracht sind, und wobei die mindestens zwei zweiten Schuberzeugungsvorrichtungen (220a, 220b) an der Verbindungsvorrichtung (240) auf derselben Seite des Kastens (244) angebracht sind, an der die zweite Befestigung (235) angeordnet ist.

8. Lasttraganordnung (190) nach einem der Ansprüche 1 bis 6, bei der die erste Befestigung ferner umfasst:
ein Drehgelenk (232), das vorgesehen ist, um eine Drehbewegung des Kastens (244) um die durch die erste Richtung (z) definierte Achse relativ zu dem Tragseil (175) zu ermöglichen.

9. Lasttraganordnung (190) nach einem der vorhergehenden Ansprüche, die ferner umfasst:
eine Mehrzahl von Sensoren (250), die an der Verbindungsvorrichtung (240) angebracht sind und Sensordaten über den Zustand des Lastaufnahmesystems (200) erzeugen, wobei die Sensordaten mit mindestens einer Bewegungsänderung des Lastaufnahmesystems (200), einer Drehung um die durch die erste Richtung (z) definierte Achse, einer Drehung um eine durch die zweite Richtung (x) definierte erste zusätzliche Achse oder einer Drehung um eine durch die dritte Richtung (y) definierte zweite zusätzliche Achse verknüpft sind.

10. Lasttraganordnung (190) nach Anspruch 9, bei der die Mehrzahl von Sensoren (250) ferner umfasst:
eine Kamera (252), die an der Verbindungsvorrichtung (240) angebracht ist und Sensordaten in Form eines Videofeeds erzeugt.

11. Lasttraganordnung (190) nach Anspruch 9, die ferner umfasst:
eine Kommunikationsvorrichtung (260), die an der Verbindungsvorrichtung (240) angebracht ist, mit mindestens einigen der mehreren Sensoren (250) verbunden ist und eingerichtet ist, mindestens einen Teil der Sensordaten von den mindestens einigen der mehreren Sensoren (250) an einen Bediener zu senden und Befehlssignale von dem Bediener zu empfangen.

12. Lasttraganordnung (190) nach Anspruch 11, die ferner umfasst:
eine Steuerung (270), die an der Verbindungsvorrichtung (240) angebracht ist und die mindestens zwei ersten und zweiten Schuberzeugungsvorrichtungen (210a, 210b, 220a, 220b) zumindest auf der Grundlage einiger der Sensordaten oder der Befehlssignale von der Bedienperson steuert.

13. Lasttraganordnung(190) nach einem der vorhergehenden Ansprüche, die ferner umfasst:
mindestens eine Batterie (246), die an der Verbindungsvorrichtung (240) angebracht ist, oder ein Stromkabel (179), das mit dem Tragseil (175) verbunden ist, wobei die mindestens eine Batterie (246) oder das Stromkabel (179) die mindestens zwei ersten Schuberzeugungsvorrichtungen (210a, 210b) mit Strom versorgt.

14. Verfahren (300) zum Betreiben der Lasttraganordnung nach einem der vorhergehenden Ansprüche, mit den Schritten:
Verwenden (310) einer Mehrzahl von Sensoren zum Erzeugen von Sensordaten über den Zustand des Lastaufnahmesystems (200), das über ein Tragseil und (175) mindestens eine Hebevorrichtung oder eine Lasthakenanordnung (180) an einem Drehflügelflugzeug (100) angebracht ist, wobei die Sensordaten mit mindestens einer Bewegungsänderung des Lastaufnahmesystems, einer Drehung um eine durch eine erste Richtung (z) definierte erste Achse, einer Drehung um eine durch eine zweite Richtung (x) definierte zweite Achse oder einer Drehung um eine durch eine dritte Richtung (y) definierte dritte Achse verknüpft sind, wobei die erste, zweite und dritte Richtung orthogonal zueinander sind;
mit einer Kommunikationsvorrichtung, Empfangen (320) von Befehlssignalen von einem Bediener; und
Verwenden (330) einer Steuerung, um zumindest die beiden ersten und zweiten schuberzeugenden Vorrichtungen auf der Grundlage zumindest einiger der Sensordaten oder der Befehlssignale vom Bediener zu steuern.

## Revendications

1. Ensemble de transport de charges (190) pour transporter une charge au moyen d'un aéronef à voilure tournante (100), comprenant un câble de transport de marchandises (175) et un système d'interface d'accrochage de charges (200),
le câble de transport de marchandises (175) comprenant :
une première extrémité (176) pouvant être fixée à au moins l'un parmi un treuil (170) ou un agencement de crochet pour marchandises (180) de l'aéronef à voilure tournante (100), et
une seconde extrémité (177) ; et
le système d'interface d'accrochage de charges (200), comprenant :
une première fixation (230) qui est fixée à la seconde extrémité (177) du câble de transport de marchandises (175),
une seconde fixation (235) qui est apte à recevoir une charge,
un agencement de raccordement (240) qui raccorde la première fixation (230) à la seconde fixation (235), dans lequel l'agencement de raccordement (240) s'étend entre les première et seconde fixations (230, 235) suivant une première direction (z) et comprend une poutre (242) qui raccorde la première fixation (230) à la seconde fixation (235), dans lequel l'agencement de raccordement (240) comprend en outre un boitier (244) qui est fixé à la poutre (242), et dans lequel la poutre (242) définit la première direction (z) et est apte à transférer le poids de la charge depuis la seconde fixation (235) vers la première fixation (230),
au moins deux premiers dispositifs de production de poussée (210a, 210b) qui sont fixés à l'agencement de raccordement (240) et qui produisent de la poussée suivant une deuxième direction (x) qui est orthogonale à la première direction (z), et
au moins deux seconds dispositifs de production de poussée (220a, 220b) qui sont fixés à l'agencement de raccordement (240) et qui produisent de la poussée suivant une troisième direction (y) qui est orthogonale aux première et deuxième directions (z, x).

2. Ensemble de transport de charges (190) selon la revendication 1, dans lequel le câble de transport de marchandises (175) est prévu pour déplacer le système d'interface d'accrochage de charges (200) suivant la première direction (z).

3. Ensemble de transport de charges (190) selon l'une quelconque des revendications précédentes, dans lequel lesdits au moins deux premiers dispositifs de production de poussée (210a, 210b) sont aptes à déplacer le système d'interface d'accrochage de charges (200) suivant la deuxième direction (x) et à permettre un déplacement en rotation autour d'un axe défini par la première direction (z).

4. Ensemble de transport de charges (190) selon l'une quelconque des revendications précédentes, dans lequel lesdits au moins deux seconds dispositifs de production de poussée (220a, 220b) sont aptes à déplacer le système d'interface d'accrochage de charges (200) suivant la troisième direction (y).

5. Ensemble de transport de charges (190) selon l'une quelconque des revendications précédentes, dans lequel lesdits au moins deux premiers dispositifs de production de poussée (210a, 210b) comprennent des pales rotatives.

6. Ensemble de transport de charges (190) selon l'une quelconque des revendications précédentes, dans lequel lesdits au moins deux seconds dispositifs de production de poussée (220a, 220b) comprennent des pales rotatives.

7. Ensemble de transport de charges (190) selon l'une quelconque des revendications précédentes, dans lequel lesdits au moins deux premiers dispositifs de production de poussée (210a, 210b) sont fixés à l'agencement de raccordement (240) suivant la troisième direction (y) sur les côtés opposés du boitier (244), et dans lequel lesdits au moins deux seconds dispositifs de production de poussée (220a, 220b) sont fixés à l'agencement de raccordement (240) du même côté du boitier (244) sur lequel la seconde fixation (235) est aménagée.

8. Ensemble de transport de charges (190) selon l'une quelconque des revendications 1 à 6, dans lequel la première fixation comprend en outre :
une articulation (232) qui est prévue pour permettre un déplacement en rotation du boitier (244) autour de l'axe défini par la première direction (z) par rapport au câble de transport de marchandises (175).

9. Ensemble de transport de charges (190) selon l'une quelconque des revendications précédentes, comprenant en outre :
une pluralité de capteurs (250) qui est fixée à l'agencement de raccordement (240) et qui génère des données recueillies par détection informant sur l'état du système d'interface d'accrochage de charges (200), dans lequel les données recueillies par détection sont associées à au moins l'un parmi une variation de mouvement du système d'interface d'accrochage de charges (200), une rotation autour de l'axe défini par la première direction (z), une rotation autour d'un premier axe supplémentaire défini par la deuxième direction (x), ou une rotation autour d'un deuxième axe supplémentaire défini par la troisième direction (y).

10. Ensemble de transport de charges (190) selon la revendication 9, dans lequel la pluralité de capteurs (250) comprend en outre :
une caméra (252) qui est fixée à l'agencement de raccordement (240) et qui génère des données recueillies par détection sous la forme d'un flux vidéo.

11. Ensemble de transport de charges (190) selon la revendication 9, comprenant en outre :
un dispositif de communication (260) qui est fixé à l'agencement de raccordement (240), couplé à au moins certains capteurs parmi la pluralité de capteurs (250), et apte à envoyer au moins une partie des données recueillies par détection provenant de la pluralité de capteurs (250) à un opérateur et à recevoir des signaux de commande de l'opérateur.

12. Ensemble de transport de charges (190) selon la revendication 11, comprenant en outre :
un contrôleur (270) qui est fixé à l'agencement de raccordement (240) et qui commande lesdits au moins deux premier et second dispositifs de production de poussée (210a, 210b, 220a, 220b) sur la base d'au moins certaines des données recueillies par détection ou des signaux de commande de l'opérateur.

13. Ensemble de transport de charges (190) selon l'une quelconque des revendications précédentes, comprenant en outre :
au moins l'un parmi une batterie (246) qui est fixée à l'agencement de raccordement (240), ou un équipement d'alimentation électrique (179) qui est couplé au câble de transport de marchandises (175), dans lequel ledit au moins l'un parmi une batterie (246) ou un équipement d'alimentation électrique (179) fournit en électricité lesdits au moins deux premiers dispositifs de production de poussée (210a, 210b).

14. Procédé (300) de fonctionnement de l'ensemble de transport de charges selon l'une quelconque des revendications précédentes, prévoyant de :
utiliser (310) une pluralité de capteurs pour générer des données recueillies par détection informant sur l'état du système d'interface d'accrochage de charges (200) qui est fixé via le câble de transport de marchandises (175) et via au moins l'un parmi un treuil (170) ou un agencement de crochet pour marchandises (180) à un aéronef à voilure tournante (100), dans lequel les données recueillies par détection sont associées à au moins l'un parmi une variation de mouvement du système d'interface d'accrochage de charges, une rotation autour d'un premier axe défini par une première direction (z), une rotation autour d'un deuxième axe défini par une deuxième direction (x), ou une rotation autour d'un troisième axe défini par une troisième direction (y), dans lequel les première, deuxième et troisième directions sont orthogonales les unes par rapport aux autres ;
recevoir (320) des signaux de commande d'un opérateur à l'aide d'un dispositif de communication ; et
utiliser (330) un contrôleur pour commander au moins certains parmi au moins les deux premier et second dispositifs de production de poussée sur la base d'au moins certaines des données recueillies par détection ou des signaux de commande de l'opérateur.
